(19) Europäisches Patentamt
European Patent Office
Office européen des brevets

(11) EP 2 569 872 B1

(12) **FASCICULE DE BREVET EUROPEEN**

(45) Date de publication et mention de la délivrance du brevet:
**11.09.2019 Bulletin 2019/37**

(21) Numéro de dépôt: **11723578.8**

(22) Date de dépôt: **06.05.2011**

(51) Int Cl.:
***H04B 7/04*** *(2017.01)* ***H04B 7/06*** *(2006.01)*
***H04L 27/26*** *(2006.01)*

(86) Numéro de dépôt international:
**PCT/FR2011/051027**

(87) Numéro de publication internationale:
**WO 2011/141665 (17.11.2011 Gazette 2011/46)**

(54) **PROCEDE D'EMISSION ET DE RECEPTION D'UN SIGNAL MULTIPORTEUSE, EMETTEUR, RECEPTEUR, SIGNAL ET PROGRAMME D'ORDINATEUR CORRESPONDANTS**

VERFAHREN ZUM SENDEN UND EMPFANGEN EINES MEHRTRÄGERSIGNALS, ENTSPRECHENDER SENDER, EMPFÄNGER, SIGNAL UND COMPUTERPROGRAMM

METHOD FOR SENDING AND RECEIVING A MULTICARRIER SIGNAL, CORRESPONDING TRANSMITTER, RECEIVER, SIGNAL, AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2010 FR 1053695**

(43) Date de publication de la demande:
**20.03.2013 Bulletin 2013/12**

(73) Titulaire: **Orange**
**75015 Paris (FR)**

(72) Inventeurs:
- **CARIOU, Laurent**
  **F-35700 Rennes (FR)**
- **DIALLO, Moussa**
  **F-35510 Cesson Sevigne (FR)**

(56) Documents cités:
**WO-A1-2007/109472 WO-A2-2007/103085**
**WO-A2-2008/036670 US-A1- 2007 189 408**

- **802 11 WORKING GROUP: "IEEE 802.11n Part 11: Wireless LAN Medium Access Control (MAC) and Physical Layer (PHY) specifications: Enhancements for Higher Throughput", IEEE P802.11N/D1.0, XX, XX, 1 mars 2006 (2006-03-01), pages 119-125, XP002469313,**
- **WON-JOON CHOI ET AL: "Circuit implications of MIMO technology for advanced wireless local area networks", RADIO FREQUENCY INTEGRATED CIRCUITS (RFIC) SYMPOSIUM, 2005. DIGEST OF PAPERS. 2005 IEEE, IEEE, PISCATAWAY, NJ, USA, 12 juin 2005 (2005-06-12), pages 185-188, XP010822874, DOI: DOI:10.1109/RFIC.2005.1489626 ISBN: 978-0-7803-8983-0**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### 1. Domaine de l'invention

Le domaine de l'invention est celui des communications numériques, et plus précisément des communications nécessitant une connaissance du canal de transmission à l'émission, dans des environnements présentant une légère variation du canal.

Plus précisément, l'invention concerne l'émission et la réception d'un signal à porteuses multiples permettant d'obtenir, au niveau de l'émetteur, une estimation du canal de transmission grâce à une information remontée dans un signal de retour issu du récepteur, encore appelé « feedback ».

L'invention trouve notamment des applications dans les systèmes de transmission de type MIMO mono-utilisateur, mettant par exemple en oeuvre des faisceaux (en anglais « beamforming » pour « formation de faisceaux), ou multi-utilisateurs, mettant par exemple en oeuvre une technique de type SDMA (en anglais « spatial division multiple access » pour « accès multiple à répartition spatiale »).

En particulier, l'invention trouve des applications dans les systèmes de transmission selon la norme IEEE 802.11n et surtout ses versions à venir.

### 2. Art antérieur

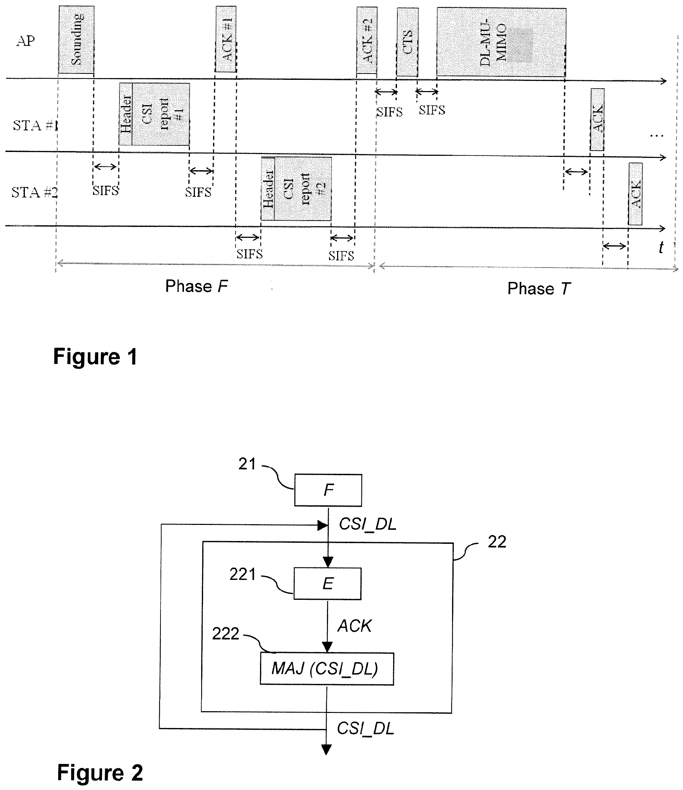

Les techniques de transmission nécessitant une connaissance du canal de transmission à l'émission comprennent deux phases, comme illustré en figure 1 pour une technique SDMA : une phase *F* d'estimation du canal par récupération de l'information du canal par « feedback », sans transmission de données utiles, et une phase *T* de transmission de données utiles.

Pendant la phase de « feedback », l'émetteur, par exemple un point d'accès AP, envoie un paquet comprenant des pilotes, appelé paquet de « sounding », vers les stations (STA#1, STA#2) qui peuvent estimer le canal descendant, noté également canal en « DownLink » ou DL. Ces stations encodent ensuite l'information d'estimation du canal, notée *CSI_DL,* et la transmettent vers le point d'accès AP, dans une trame notée "*CSI report*". Ce mode d'estimation du canal est parfois appelé « explicit feedback », pour « retour explicite ».

Pendant la phase de transmission, le point d'accès AP envoie un ou plusieurs paquets de données utiles "*DL-MU-MIMO*" vers plusieurs utilisateurs, par exemple en utilisant un faisceau particulier vers chaque utilisateur. La figure 1 présente un élément de base, c'est-à-dire un paquet de transmission de données utiles suivi d'acquittements de réception de ces données utiles, émis par les utilisateurs. Cet élément de base peut être dupliqué autant de fois que souhaité, tant que le canal n'a pas évolué. Cette évolution temporelle du canal détermine donc la durée de la phase de transmission. Ainsi, si le canal varie suffisamment en 25ms pour que la technique SDMA ne fonctionne plus, par exemple parce que l'interférence entre utilisateurs devient trop forte, alors la durée de la phase de transmission doit être inférieure à 25ms.

A la fin de cette phase de transmission, une nouvelle phase de « feedback » est mise en oeuvre, afin d'obtenir une estimation à jour du canal de transmission.

On note donc que plus la deuxième phase de transmission de données utiles est longue et plus le débit total de transmission est important.

Cependant, comme indiqué ci-dessus, la longueur de cette deuxième phase est restreinte par les variations temporelles du canal, dues aux déplacements de l'émetteur ou du récepteur, ou simplement à certains déplacements dans l'environnement.

Par exemple, la technique dite de « beamforming » selon la norme 802.11n, qui permet de focaliser la puissance d'émission vers un récepteur particulier, et ainsi d'augmenter le rapport signal à bruit en réception, met en oeuvre une phase de feedback toutes les 100ms dans un espace ouvert (« open-space » en anglais), sans déplacement des émetteurs/récepteurs.

Cette période de mise en oeuvre de la phase de feedback est réduite à 25ms, dans le même environnement, avec la technique SDMA multi-utilisateur.

Comme la période de mise en oeuvre de la phase de feedback conditionne largement le débit de transmission total, il est important de l'augmenter le plus possible, c'est-à-dire d'augmenter la durée de la phase de transmission entre deux phases de « feedback ».

Il existe plusieurs techniques permettant de modifier le rapport entre les durées des phases de feedback et de transmission, de manière à optimiser le débit de transmission total.

Une première catégorie de techniques consiste à réduire la durée de la phase de « feedback », en comprimant les informations du canal. Cette compression se fait cependant souvent au détriment de la qualité de la transmission.

Une deuxième catégorie de techniques consiste à prolonger la durée de la phase de transmission.

Dans le cas de la technique SDMA par exemple, un point d'accès AP possédant quatre antennes peut transmettre simultanément sur la même bande de fréquence vers quatre utilisateurs/récepteurs, en formant un faisceau vers chaque utilisateur afin de supprimer l'interférence entre utilisateurs. Ces faisceaux sont calculés à partir de l'information du canal de chaque utilisateur.

Dans le cas idéal, chaque utilisateur ne reçoit que l'information qui lui est destinée, c'est-à-dire un flux spatial parmi les quatre flux spatiaux envoyés par le point d'accès.

Selon un premier mode, le point d'accès n'envoie donc vers chaque utilisateur que les symboles pilotes nécessaires à estimer le canal du flux spatial qui lui est destiné.

Cependant, pour différentes raisons, dont par exemple l'évolution temporelle du canal, un utilisateur peut recevoir l'information qui lui est destinée interférée par l'information destinée aux autres utilisateurs.

Si un utilisateur possède plus d'antennes de réception que de flux spatiaux qui lui sont destinés, il lui est possible de supprimer tout ou une partie de l'interférence par des techniques d'annulation d'interférence (comme la technique « EQMM » pour « Erreur Quadratique Moyenne Minimale » ou « MMSE » pour « Minimum Mean Square Error » en anglais). Ceci n'est cependant possible que si cet utilisateur est capable d'estimer le canal pour les flux spatiaux à destination des autres utilisateurs.

Pour pouvoir supprimer tout ou une partie de l'interférence, selon un deuxième mode, le point d'accès transmet donc, vers chaque utilisateur, les symboles pilotes lui permettant d'estimer le canal pour le flux spatial qui lui est destiné, ainsi que les symboles pilotes lui permettant d'estimer le canal pour les flux spatiaux destinés aux autres utilisateurs. Ce deuxième mode permet d'être plus robuste à des variations du canal dans le temps, parce qu'il permet d'annuler l'interférence générée. Bien évidemment, dès que l'interférence devient trop importante, une nouvelle phase de « feedback » doit être mise en oeuvre.

Cependant, un inconvénient des techniques d'annulation d'interférences réside dans la nécessité de transmettre plus de symboles pilotes vers chaque utilisateur, ce qui réduit l'efficacité de la couche physique du système de transmission.

Un autre inconvénient de ces techniques est dû au fait qu'il est nécessaire d'avoir, au niveau des utilisateurs, au moins une antenne de plus que de flux spatiaux à recevoir. Cela induit une complexité plus importante, et un coût supplémentaire, au niveau du récepteur. Dans la mesure où ces récepteurs sont de plus en plus souvent des stations mobiles, cet inconvénient peut prendre une dimension assez

Il est connu de la demande US 2007/0189408 A1 d'estimer un canal de transmission descendante avant de pouvoir effectuer une formation de faisceau. A partir d'une estimée de canal montant, on exploite la réciprocité des canaux TDD pour estimer le canal descendante. L'estimée du canal montant peut être obtenue à partir d'un signal d'acquittement émis sur le lien montant.

La demande internationale WO 2008/036670 A2 divulgue la calibration d'une matrice de formation de faisceau descendant en se fondant sur un paquet d'acquittement sur le lien montant et sur la rétroaction d'une information complète sur l'état du canal descendant.

La demande internationale WO 2007/109472 A1 mentionne l'utilisation des paquets d'acquittement sur le lien montant pour la formation de faisceau en voie descendante.

Il existe donc un besoin pour une nouvelle technique d'émission/réception dans des systèmes de transmission nécessitant une connaissance du canal à l'émission, permettant d'optimiser la durée de la phase de transmission entre deux phases de « feedback ».

## 3. Exposé de l'invention

L'invention propose un procédé d'émission d'un signal multiporteuse selon la revendication 1, un émetteur d'un signal multiporteuse selon la revendication 5 ainsi qu'un programme d'ordinateur selon la revendication 6. Autres modes de réalisation qui ne sont pas couverts par les revendications sont utiles pour la compréhension de l'invention.

Selon l'invention, un tel procédé comprend une phase de transmission mettant en oeuvre au moins une itération des étapes suivantes, pour au moins un canal descendant :

- émission de données utiles sur le canal descendant, tenant compte de l'estimation du canal descendant ;
- mise à jour de l'estimation du canal descendant, en tenant compte d'une information d'acquittement de réception des données utiles, émise par le récepteur associé au canal descendant.

L'invention propose ainsi, pendant la phase de transmission de données utiles, de mettre à jour, ou d'actualiser, une estimation « initiale » de canal descendant, effectuée selon une technique classique d'estimation de canal, par exemple une technique dite « explicit feedback », décrite ci-dessus en relation avec l'art antérieur, ou une technique dite « implicit feedback », utilisant une estimation de canal montant et une conversion de cette estimation en information de canal descendant. La technique dite "implicit feedback" repose sur le fait que le canal est réciproque, c'est-à-dire qu'il peut être estimé de manière identique dans un sens comme dans l'autre, et propose donc d'estimer le canal dans le sens montant. L'intérêt de cette technique est que l'estimation de canal est effectuée au niveau de l'émetteur, et non au récepteur. La transmission d'une estimation du canal par la voie de retour n'est donc pas nécessaire. Cependant, la réciprocité du canal n'est valable que pour la transmission entre antennes, et non pour le passage dans les composants analogiques en émission et en réception. Une calibration est alors nécessaire pour convertir l'estimation effectuée dans le sens montant en une estimation représentative du sens descendant.

Au contraire, les techniques de l'art antérieur reposent sur deux phases distinctes de « feedback » et de transmission de données utiles, seule la phase de « feedback » permettant d'estimer le canal descendant.

En actualisant ainsi, pendant la phase de transmission, l'estimation de canal initialement obtenue de manière classique lors d'une phase de « feedback », l'invention permet d'augmenter la durée de cette phase de transmission entre deux phases de « feedback ».

En effet, l'estimation de canal actualisée est prise en considération par l'émetteur (par exemple un point d'accès) pour la transmission des données utiles, au fur et à mesure de cette transmission, permettant ainsi de tenir compte des variations temporelles du canal, et non plus seulement de l'estimation initiale du canal obtenue lors de la phase de « feedback ».

Ainsi, au fur et à mesure de la transmission, l'estimation de canal précédemment actualisée selon l'invention est à nouveau actualisée, à partir d'une nouvelle information d'acquittement émise par le récepteur associé au canal. L'invention permet ainsi une actualisation itérative de l'estimation de canal, au fur et à mesure de la transmission de données utiles.

De plus, l'invention, en utilisant une information d'acquittement émise par un récepteur, nécessaire au fonctionnement d'un tel système de transmission, ne nécessite pas la mise en oeuvre de signaux supplémentaires. Par exemple, l'information d'acquittement correspond à une trame d'acquittement d'une couche liaison de données, dite couche MAC.

Dans le cas où il y a plusieurs récepteurs, l'invention permet d'actualiser l'estimation des canaux descendants associés aux récepteurs, en utilisant les informations d'acquittement émises par les récepteurs.

Selon un mode de réalisation particulier de l'invention, l'étape de mise à jour comprend les sous-étapes suivantes :

- réception de l'information d'acquittement ;
- estimation du canal montant correspondant au canal descendant, à partir de l'information d'acquittement ;
- actualisation de l'estimation du canal descendant à partir de l'estimation du canal montant.

Ainsi, l'invention permet d'actualiser l'estimation d'un canal descendant à partir d'une estimation d'un canal montant, obtenue à partir de l'information d'acquittement de données utiles émise par un récepteur, et donc sans nécessiter la mise en oeuvre de signaux supplémentaires.

Pour ce faire, la première itération de la phase de transmission met en oeuvre une étape de détermination d'un facteur de calibration par comparaison de l'estimation du canal descendant, obtenue lors de l'étape d'obtention, et de l'estimation du canal montant correspondant au canal descendant. De plus, l'étape d'actualisation tient également compte du facteur de calibration.

Ainsi, l'invention, en tenant compte d'un facteur de calibration, représentatif des différences entre les composants analogiques utilisés en réception et en émission, permet de déterminer une estimation actualisée fiable du canal descendant, à partir d'une estimation du canal montant correspondant.

En effet, le facteur de calibration obtenu à la suite d'une première transmission de données utiles, et donc à la suite de la réception d'une première information d'acquittement émise par un récepteur, permet de tenir compte des composants analogiques utilisés en réception et en émission, qui ne sont pas concernés par la réciprocité du canal. En effet, seule la transmission dans l'air est identique, en réception ou en émission.

Selon un mode de réalisation particulier de l'invention, dans lequel un récepteur comprend une seule antenne de réception, l'étape d'estimation du canal montant utilise au moins un pilote transmis par l'information d'acquittement. Dans ce cas, il n'y a qu'un canal descendant, et un canal montant correspondant, entre l'émetteur et le récepteur.

Ainsi, l'invention utilise les pilotes classiquement transmis avec l'information d'acquittement des données utiles transmise par un canal descendant, par exemple dans un paquet d'estimation de canal (L_LTF) d'une trame d'acquittement de la couche MAC, afin d'estimer le canal montant correspondant au canal descendant.

Selon un autre mode de réalisation particulier de l'invention, dans lequel un récepteur comprend au moins deux antennes de réception et où l'information d'acquittement est reçue sous la forme d'une trame d'acquittement de la couche MAC, comprenant un paquet d'estimation de canal (L_LTF) portant deux jeux de pilotes associés chacun à une antenne de réception distincte du récepteur, l'étape d'estimation du canal montant est mise en oeuvre, pour chacun des canaux montants, à partir du jeu de pilotes associé à ce canal montant.

Ainsi, l'invention permet d'estimer, à partir d'une information d'acquittement comprenant un seul paquet d'estimation de canal, chaque canal montant associé à chaque antenne du récepteur. En effet, l'information d'acquittement comprend dans ce cas des jeux de pilotes associés chacun à un canal montant, et l'émetteur, lorsqu'il reçoit cette information d'acquittement, est apte à distinguer les jeux de pilotes associés à chacun des canaux montants afin d'estimer chacun de ces canaux montants.

Selon un autre mode de réalisation particulier de l'invention, l'information d'acquittement est reçue sous la forme d'une trame d'acquittement de la couche MAC, comprenant un paquet d'estimation de canal distinct associé à chaque antenne de réception dudit récepteur (HT_LTF1 et HT_LTF2). Dans ce cas, l'étape d'estimation du canal montant est mise en oeuvre pour chacun des canaux montants à partir du paquet d'estimation de canal associé à l'antenne de réception définissant le canal montant.

Ainsi, l'invention permet d'estimer, à partir d'une information d'acquittement comprenant plusieurs paquets d'estimation de canal (par exemple un pour chaque canal associé à chaque antenne du récepteur), chaque canal montant associé à chaque antenne du récepteur. En effet, l'émetteur, lorsqu'il reçoit l'information d'acquittement, est apte à estimer chacun des canaux montants à partir des paquets distincts d'estimation de canal associés.

Selon un aspect particulier de l'invention, l'étape d'estimation du canal montant délivre une estimation d'une première portion de la réponse fréquentielle du canal montant, et le procédé d'émission comprend une étape d'interpolation fréquentielle et/ou temporelle permettant d'estimer une deuxième portion de la réponse fréquentielle à partir de la première portion.

Ainsi, dans certaines situations, par exemple lorsque les données utiles ne sont pas transmises sur la même bande de fréquence que l'information d'acquittement, l'information d'acquittement ne permet pas d'estimer toute la réponse fréquentielle du canal montant. Dans ce cas, l'invention permet d'obtenir une estimation complète de la réponse fréquentielle du canal montant en mettant en oeuvre une interpolation fréquentielle, le cas échéant associée à une interpolation temporelle, à partir de la partie de la réponse fréquentielle estimée grâce à l'information d'acquittement.

L'invention concerne également un émetteur d'un signal multiporteuse à destination d'au moins un récepteur mettant en oeuvre au moins une antenne de réception, l'émetteur mettant en oeuvre au moins deux antennes d'émission, et comprenant des moyens d'obtention d'une estimation d'au moins un canal de transmission descendant, où un canal descendant est défini entre une des antennes d'émission et la ou une des antennes de réception.

Selon l'invention, un tel émetteur comprend également les moyens suivants, activés au moins une fois pour au moins un canal descendant sous la forme d'une itération :

- des moyens d'émission de données utiles sur le canal descendant, tenant compte de l'estimation du canal descendant ;
- des moyens de mise à jour de l'estimation du canal descendant, tenant compte d'une information d'acquittement de réception des données utiles, émise par le récepteur associé au canal descendant.

Un tel émetteur est notamment adapté à mettre en oeuvre le procédé d'émission décrit précédemment. Il s'agit par exemple d'un point d'accès d'un réseau Wifi.

Un autre aspect de l'invention concerne un procédé de réception d'un signal correspondant à un signal multiporteuse émis par un émetteur mettant en oeuvre au moins deux antennes d'émission, reçu par un récepteur mettant en oeuvre au moins deux antennes de réception.

Selon l'invention, un tel procédé de réception comprend au moins une itération des étapes suivantes pour au moins deux canaux descendants, où un canal descendant est défini entre une des antennes d'émission et une des antennes de réception :

- réception de données utiles sur les canaux descendants ;
- génération et émission d'une information d'acquittement de réception des données utiles permettant une estimation, par l'émetteur, des canaux montants correspondant aux canaux descendants.

Ainsi, l'invention permet d'estimer des canaux montants correspondant aux antennes d'un récepteur, en utilisant une information d'acquittement, nécessaire au fonctionnement d'un tel système de transmission, générée et émise par le récepteur et donc sans mise en oeuvre de signaux supplémentaires.

Par exemple, selon un mode de réalisation particulier de l'invention, l'étape de génération génère une information d'acquittement sous la forme d'une trame d'acquittement d'une couche liaison de données, dite couche MAC, comprenant un paquet d'estimation de canal (L_LTF) portant au moins deux jeux de pilotes associés chacun à une antenne de réception distincte dudit récepteur.

Selon un aspect particulier de ce mode de réalisation, les pilotes des jeux de pilotes sont agencés de façon que, lors de l'étape d'émission d'une information d'acquittement, un pilote est émis par une seule des antennes de réception à un instant donné et à une fréquence donnée.

Au niveau du point d'accès, les jeux de pilotes associés aux antennes étant orthogonaux, ils sont détectés individuellement de façon à pouvoir estimer chacun des canaux montants.

Ainsi, une information d'acquittement comprenant un seul paquet d'estimation de canal permet d'estimer chaque canal montant associé à chaque antenne du récepteur.

Selon un deuxième mode de réalisation, l'étape de génération génère une information d'acquittement sous la forme d'une trame d'acquittement d'une couche liaison de données, dite couche MAC, comprenant un paquet d'estimation de canal distinct associé à chaque antenne de réception du récepteur (HT_LTF1 et HT_LTF2).

Ainsi, une information d'acquittement comprend plusieurs paquets d'estimation de canal (par exemple un pour chaque canal associé à chaque antenne du récepteur), chaque paquet permettant d'estimer le canal montant correspondant.

Il est à noter que, dans ce mode de réalisation, la compatibilité avec les normes précédentes est conservée lorsque le paquet «classique» d'estimation de canal (L-LTF) est quand même transmis, en plus des paquets associés à chaque antenne de réception du récepteur (HT_LTF1 et HT_LTF2).

Selon un aspect particulier de l'invention, l'étape de génération génère une information d'acquittement sous la forme d'une trame d'acquittement d'une couche liaison de données, dite couche MAC, et l'étape d'émission émet au moins une première portion de la trame d'acquittement sur une bande de fréquence de 40 MHz, et, le cas échéant, une deuxième portion de la trame d'acquittement sur deux bandes de fréquence de 20 MHz.

Ainsi, certaines situations, par exemple lorsque les données utiles ne sont pas transmises sur la même bande de fréquence que l'information d'acquittement, sont traitées de manière particulière de façon à ce que l'estimation de chaque canal montant puisse être mise en oeuvre sans nécessiter d'interpolation fréquentielle/temporelle au niveau du point d'accès.

Dans ces situations, une première solution consiste à envoyer la trame d'acquittement sur la même bande de fréquence que les données utiles.

Une deuxième solution consiste à n'envoyer, sur la même bande de fréquence que les données utiles, que la partie (première portion) de la trame d'acquittement qui permet d'estimer le canal, de façon à assurer une compatibilité maximum avec les stations existantes et les normes précédentes.

Par exemple, la première portion correspond à au moins un paquet d'estimation de canal.

L'invention concerne également un récepteur d'un signal correspondant à un signal multiporteuse émis par un émetteur mettant en oeuvre au moins deux antennes d'émission, le récepteur mettant en oeuvre au moins deux antennes de réception.

Selon l'invention, un tel récepteur comprend les moyens suivants, activés au moins une fois pour au moins deux canaux descendants, où un canal descendant est défini entre une des antennes d'émission et une des antennes de réception, sous la forme d'une itération :

- des moyens de réception de données utiles sur les canaux descendants ;
- des moyens de génération et des moyens d'émission d'une information d'acquittement de réception des données utiles permettant une estimation, par l'émetteur, des canaux montants correspondant aux canaux descendants.

Un tel récepteur est notamment adapté à mettre en oeuvre le procédé de réception décrit précédemment. Il s'agit par exemple d'une station d'un ensemble de services de base d'un réseau Wifi.

Ce récepteur pourra bien sûr comporter les différentes caractéristiques relatives au procédé de réception selon l'invention. Ainsi, les caractéristiques et avantages de ce récepteur sont les mêmes que ceux du procédé de réception, et ne sont pas détaillés plus amplement.

Un autre aspect de l'invention concerne un signal d'acquittement émis par un récepteur mettant en oeuvre au moins deux antennes de réception, à destination d'un émetteur mettant en oeuvre au moins deux antennes d'émission.

Selon l'invention, un tel signal d'acquittement porte une information d'acquittement de réception de données utiles émises par l'émetteur via au moins deux canaux descendants, un canal descendant étant défini entre une des antennes d'émission et une des antennes de réception, l'information d'acquittement de réception de données utiles permettant une estimation, par l'émetteur, des canaux montants correspondant aux canaux descendants.

Les procédés d'émission et de réception selon l'invention peuvent être mis en oeuvre de diverses manières, notamment sous forme câblée ou sous forme logicielle.

Un autre aspect de l'invention concerne un programme d'ordinateur comportant des instructions adaptées à la mise en oeuvre du procédé d'émission et/ou du procédé de réception décrits ci-dessus, lorsque le programme est exécuté par un processeur. Un tel programme peut utiliser n'importe quel langage de programmation. Il peut être téléchargé depuis un réseau de communication et/ou enregistré sur un support lisible par ordinateur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente un exemple des phases nécessaires à la transmission de données pour une technique SDMA selon l'art antérieur ;
- la figure 2 présente les principales étapes du procédé d'émission selon un mode de réalisation de l'invention ;
- la figure 3 illustre un exemple de trame d'acquittement de la couche MAC, selon l'art antérieur ;
- la figure 4 illustre un exemple de distribution de sous-porteuses pour un signal de données utiles et un signal d'acquittement, selon l'art antérieur ;
- la figure 5 illustre un exemple d'information d'acquittement selon un mode de réalisation de l'invention ;
- les figures 6a et 6b illustrent respectivement un exemple de trame d'acquittement de la couche MAC, selon l'art antérieur et un exemple de trame d'acquittement modifiée selon un mode de réalisation de l'invention ;
- la figure 7 présente la structure d'un émetteur selon un mode de réalisation particulier de l'invention.

## 5. Description d'un mode de réalisation de l'invention

### *5.1 Principe général*

L'invention s'inscrit dans le contexte de transmissions nécessitant une connaissance du canal de transmission à l'émission, dans des environnements présentant une légère variation du canal. Classiquement, cette connaissance du canal à l'émission est obtenue par une estimation du canal, lors d'une phase de « feedback », préalable à la transmission de données, et mise en oeuvre périodiquement pour pouvoir tenir compte des variations du canal.

Le principe général de l'invention repose sur l'actualisation, pendant la transmission de données, de l'estimation du canal descendant, entre un émetteur et un récepteur, permettant d'optimiser la durée de la phase de transmission, entre deux phases de « feedback ».

Pour ce faire, l'invention utilise des informations d'acquittement émises par le récepteur, pour acquitter la réception de données utiles émises par l'émetteur, pour actualiser l'estimation du canal descendant.

Ainsi, l'estimation de canal étant actualisée pendant la phase de transmission de données utiles, la durée de cette phase de transmission peut être allongée, avant la mise en oeuvre d'une nouvelle phase de « feedback », car la transmission de données utiles tient compte de l'estimation de canal réactualisée.

De cette manière, l'invention permet d'optimiser le rapport entre la durée de la phase de « feedback » et la durée de la phase de transmission, et donc d'optimiser le débit total de transmission.

*5.2 Description d'un mode de réalisation*

On présente maintenant, en relation avec la figure 2, les principales étapes du procédé d'émission selon un mode de réalisation de l'invention.

On considère un système de transmission comprenant un émetteur mettant en oeuvre au moins deux antennes d'émission et au moins un récepteur, mettant en oeuvre au moins une antenne de réception.

Selon ce mode de réalisation de l'invention, le procédé d'émission comprend, pour au moins un canal descendant, entre une antenne de l'émetteur et une antenne du récepteur, une étape 21 d'obtention d'une estimation *CSI_DL* du canal descendant. Cette étape 21 est par exemple mise en oeuvre selon une technique classique d'estimation de canal, par exemple une technique dite « explicit feedback», décrite ci-dessus en relation avec l'art antérieur, ou une technique dite « implicit feedback », utilisant une estimation de canal montant et une conversion de cette estimation en information de canal descendant. Cette étape 21 correspond par exemple à la phase *F* de « feedback » déjà décrite ci-dessus.

Cette estimation de canal *CSI_DL* initialement obtenue est ensuite mise à jour, ou actualisée, pendant une phase de transmission 22, mettant en oeuvre au moins une fois les étapes 221 et 222 décrites ci-dessous.

Tout d'abord, une étape 221 d'émission *E* de données utiles est mise en oeuvre, en tenant compte de l'estimation de canal *CSI_DL* (initialement obtenue par l'étape 21 lorsque l'on met en oeuvre la première itération de la phase de transmission 22, ou une estimation de canal *CSI_DL* préalablement actualisée selon l'invention lorsqu'on met en oeuvre une $i^{ème}$ itération de la phase de transmission 22).

Le récepteur, pour valider la réception des données utiles émises lors de l'étape 221, émet une information d'acquittement *ACK* de réception des données utiles.

Cette information d'acquittement est utilisée, selon ce mode de réalisation de l'invention, pour actualiser, lors d'une étape 222 de mise à jour *MAJ*, l'estimation de canal *CSI_DL.*

Cette estimation de canal *CSI_DL* actualisée est alors prise en compte pour la transmission des données utiles suivantes, lors d'une itération suivante de l'étape 221 d'émission, et ainsi de suite.

Plus précisément, l'étape de mise 222 de mise à jour *MAJ* de l'estimation de canal *CSI_DL* met en oeuvre une étape d'estimation du canal montant, encore noté canal « UpLink » ou UL, correspondant au canal descendant, à partir de l'information d'acquittement *ACK* émise par le récepteur.

Cette étape d'estimation délivre une information d'estimation de canal montant notée *CSI_UL.*

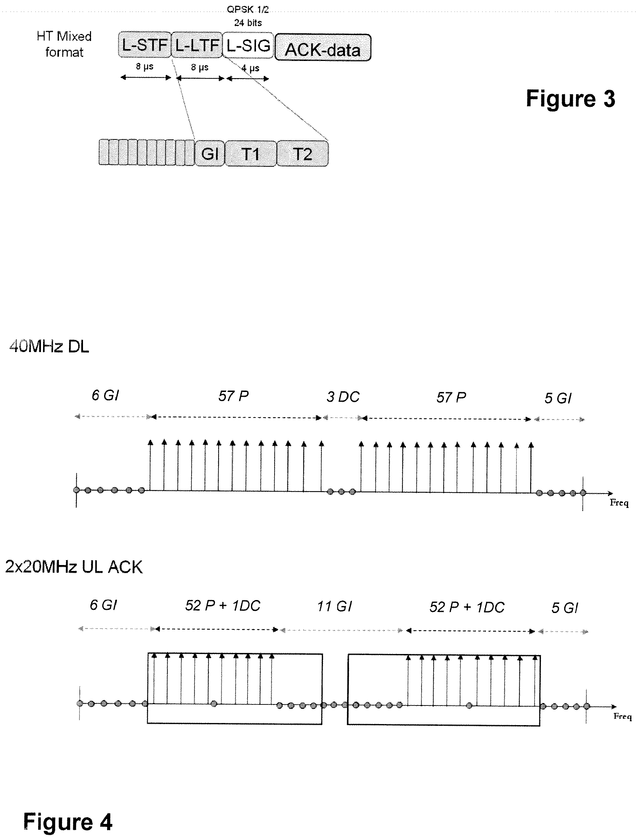

On décrit maintenant, en relation avec les figures 3, 4, 5, 6a et 6b, différentes variantes de réalisation de ce mode de réalisation de l'invention pour estimer un canal montant, à partir d'une information d'acquittement de données utiles.

On décrira ensuite la mise en oeuvre, selon l'invention, de l'actualisation de l'estimation du canal descendant, à partir de l'estimation du canal montant correspondant, ainsi que l'utilisation de l'estimation de canal actualisée pour la transmission des données utiles.

*5.3 Estimation d'un canal montant selon un mode de réalisation*

*5.3.1 Première variante : un récepteur avec une antenne*

On considère un premier cas particulier où un récepteur ne met en oeuvre qu'une antenne de réception, et où les acquittements sont émis, via un canal montant, par cette antenne sur une même bande de fréquence (par exemple 20MHz) que les données utiles émises par l'émetteur, via le canal descendant correspondant.

Dans ce cas, une trame d'acquittement « classique », telle qu'illustrée en figure 3, peut être utilisée. Par exemple, selon la norme 802.11, les pilotes transmis dans le champ L-LTF (pour « Legacy Long Training Field » en anglais) peuvent être utilisés par l'émetteur pour estimer le canal montant correspondant au canal descendant sur lequel il a émis les données utiles.

Dans l'exemple illustré en figure 3, le champ L-LTF est composé de pilotes (un jeu de pilotes T1 dupliqué en T2=T1), transmis sur chaque sous-porteuse du signal multi-porteuse d'acquittement des données utiles.

On considère également un deuxième cas particulier où un récepteur ne met en oeuvre qu'une antenne de réception, et où les acquittements sont émis par cette antenne sur une bande de fréquence différente de celle des données utiles émises par l'émetteur.

Ce cas particulier peut par exemple se rencontrer selon la norme 802.11n ou 802.11ac, lorsque les données utiles sont transmises, via un canal descendant, dans une bande de fréquence de 40MHz et les acquittements, via le canal montant correspondant, sur une bande de fréquence de 2x20MHz. Dans ce cas, les sous-porteuses du signal multiporteuse de données utiles ne sont pas distribuées de la même façon que les sous-porteuses du signal multiporteuse d'acquittement, comme illustré en figure 4.

Ainsi, on peut noter que, pour une bande de fréquence de 40MHz, les 128 sous-porteuses utilisées sont distribuées de la manière suivante :

- 114 sous-porteuses sont des pilotes P permettant l'estimation du canal (ou des données utiles),
- 14 sous-porteuses sont modulées par des valeurs nulles, notées sous-porteuses nulles, situées pour 3 d'entre elles (*DC*) en milieu de la bande de fréquence, et pour les autres (sous-porteuses de garde *GI*) sur les deux bords de la bande de fréquence, afin de limiter le recouvrement spectral avec d'autres applications utilisant des bandes de fréquence voisines.

En revanche, pour une bande de fréquence de 2x20MHZ, les 128 sous-porteuses utilisées sont distribuées de la manière suivante :

- 104 sous-porteuses sont des pilotes *P* permettant l'estimation du canal (ou des données utiles),
- 24 sous-porteuses sont des sous-porteuses nulles, situées pour 2 d'entre elles (*DC*) en milieu de chaque bande de fréquence de 20MHz, et pour les autres (sous-porteuses de garde *GI*) sur les deux bords de chaque bande de fréquence de 20MHz, afin de limiter le recouvrement spectrale avec d'autres applications utilisant des bandes de fréquence voisines.

Ainsi, on note que 11 sous-porteuses ne peuvent pas être directement estimées pour le canal montant.

Par exemple, les deux sous-porteuses nulles au milieu de chaque bande de fréquence de 20MHz peuvent être estimées par une interpolation fréquentielle, à partir des sous-porteuses voisines.

En revanche, pour les 9 sous-porteuses situées en milieu de bande de 40MHz, une interpolation fréquentielle ne suffit pas pour les estimer.

Une première solution consiste à mettre en oeuvre une interpolation fréquentielle en n'utilisant que les sous-porteuses du « bon coté » de la bande de fréquence de 20MHz, comme indiqué par les encadrés sur la figure. Cette interpolation fréquentielle peut être associée à une interpolation temporelle afin d'utiliser plus d'éléments corrélés pour l'estimation des sous-porteuses manquantes. Cette première solution a pour avantage de ne pas modifier la trame « classique » d'acquittement telle qu'illustrée en figure 3.

Une deuxième solution consiste à modifier la trame « classique » d'acquittement en la transmettant, ou du moins les symboles pilotes servant à l'estimation de canal à 40MHz au lieu de 2x20MHz. Cette solution n'est cependant pas entièrement compatible avec les anciennes versions de la norme, par exemple la version 802.11a, et peut pénaliser les stations d'ancienne génération, qui doivent dans ce cas attendre un temps plus long que les autres stations avant de reprendre une phase de contention. En effet, lorsqu'une station n'est pas capable de détecter la partie données d'une transmission (ce qui sera le cas ici), une protection des acquittements se met en place et cette même station doit attendre une durée (qui correspond à la transmission d'un acquittement) avant de pouvoir reprendre une phase de contention. Or comme le paquet considéré ici est un acquittement, il n'est pas suivi d'un acquittement et est suivi directement par une phase de contention. La station qui attendra une durée d'un autre acquittement après la transmission de l'acquittement sera donc sévèrement pénalisée.

Cette solution peut cependant avantageusement être utilisée pour tous les acquittements sauf celui qui termine un élément de base de la phase de transmission, comme décrit précédemment en relation avec la figure 1.

Une troisième solution consiste à ne transmettre que le champ L-LTF de la trame d'acquittement à 40MHz, et le reste de la trame d'acquittement à 2x20MHz. Cette solution permet de conserver une compatibilité avec les anciennes versions de la norme.

*5.3.2 Deuxième variante :un récepteur avec plusieurs antennes*

On considère maintenant le cas où les stations ont plus d'une antenne et peuvent recevoir plusieurs flux spatiaux.

L'invention permet d'estimer le canal descendant pour chaque flux spatial.

La phase d'estimation de canal, par exemple par « feedback », transmet, pour chaque flux spatial, des pilotes particuliers pour estimer le canal sur lequel sera transmis ce flux spatial.

Cependant, la trame d'acquittement «classique» est transmise sur un seul flux spatial, c'est-à-dire en n'utilisant qu'une seule antenne, ou en utilisant plusieurs antennes mais en estimant (par exemple via le champ L-LTF) uniquement le "canal équivalent monoantenne" (comme si une seule antenne était utilisée).

L'invention propose plusieurs solutions pour pouvoir estimer le canal descendant pour chaque flux spatial.

On considère dans la suite un exemple où un récepteur comprend deux antennes.

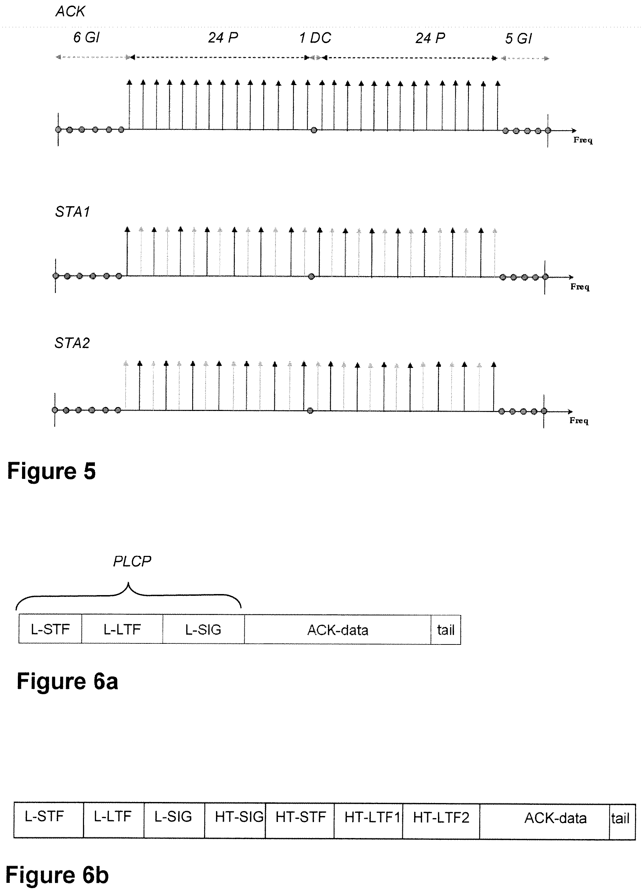

Une première solution consiste à transmettre l'acquittement en utilisant les deux antennes comme suit : une sous-porteuse utile (*P*) sur deux est transmise en utilisant la première antenne (*STA1*) et les autres sont transmises en utilisant la deuxième antenne (*STA2*), comme illustré sur la figure 5 (seules les sous-porteuses en gras sont transmises).

L'acquittement transmis (*ACK*) comprend donc un certain nombre de pilotes (*2x24P*) et des porteuses nulles (*1 DC, 6 GI* et 5 *GI*).

Côté point d'accès, l'estimation des canaux montants associés aux deux antennes est mise en oeuvre en distinguant les sous-porteuses représentatives de chacun des canaux.

Ainsi, le point d'accès utilise une première moitié des sous-porteuses, représentatives du canal provenant de l'antenne *STA1,* afin d'estimer le canal associé à l'antenne *STA1,* et une deuxième moitié des sous-porteuses, représentatives du canal provenant de l'antenne *STA2,* afin d'estimer le canal associé à l'antenne *STA2.* Le point d'accès doit dans ce cas être informé de la position des sous-porteuses correspondant aux différentes antennes. Une manière simple est de définir dans le standard un mode de transmission appliquant cette solution et de signaler l'utilisation de ce mode dans les champs de signalisation dans le préambule de chaque transmission ou dans les « beacons » diffusés par le point d'accès.

Il est à noter qu'une interpolation fréquentielle doit être effectuée afin d'estimer les sous-porteuses non transmises par les antennes. Cette interpolation peut-être effectuée en fréquence (interpolation linéaire, « MMSE », ...) ou par passage dans un domaine de transfert (par Transformée de Fourier Discrète ou « DFT », par Transformée en Cosinus Discrète ou « DCT », ...).

Le point d'accès met en oeuvre cette estimation pour chacune de ses antennes, afin d'estimer le canal montant (*CSI_UL*) correspondant au canal descendant. Dans le cas de deux antennes, le point d'accès récupère les pilotes transmis sur les sous-porteuses correspondant à la première (respectivement deuxième) antenne, estime le canal sur ces différentes sous-porteuses, et applique l'interpolation fréquentielle pour estimer le canal sur les sous-porteuses correspondant à la deuxième (respectivement première) antenne.

La généralisation de cet exemple à un nombre N d'antennes est possible en considérant une sous-porteuse sur N au lieu d'une sous-porteuse sur 2.

Une deuxième solution consiste à modifier la trame d'acquittement afin de permettre l'estimation de plusieurs canaux montants.

Pour ce faire, des champs HT-LTFs sont insérés, par exemple dans le préambule PLCP (figure 6a), comme illustré sur la figure 6b. Ces champs (HT-LTF1 et HT-LTF2) permettent respectivement d'estimer le canal montant associé à l'antenne *STA1* et le canal montant associé à l'antenne *STA2.*

Le fonctionnement et les symboles des champs HT-LTFs peuvent être conformes à la norme *IEEE P802.11n/D11.0 Draft standard for Information Technology - Telecommunications and information exchange between systems - Local and metropolitan area networks - Specific requirements Part 11: Wireless LAN Medium Access Control (MAC) and Physical Layer (PHY) spécifications Amendment 5: Enhancements for Higher Throughput, Chapitre 20.3.9.4.6.*

Cette deuxième solution n'est cependant pas entièrement compatible avec les anciennes versions de la norme, par exemple la version 802.11a, et peut pénaliser les stations d'ancienne génération, qui doivent dans ce cas attendre un temps plus long que les autres stations avant de reprendre une phase de contention, comme déjà décrit ci-dessus. Cette solution peut avantageusement être utilisée pour tous les acquittements sauf celui qui termine un élément de base de la phase de transmission, comme décrit précédemment en relation avec la figure 1.

*5.4 Utilisation de l'estimation d'un canal montant pour actualiser une estimation d'un canal descendant correspondant, selon un mode de réalisation*

*5.4.1 Actualisation de l'estimation d'un canal descendant*

On décrit maintenant la mise en oeuvre, selon un mode de réalisation de l'invention, de l'actualisation de l'estimation *CSI_DL* du canal descendant, à partir de l'estimation *CSI_UL* du canal montant correspondant, obtenue tel que décrit ci-dessus.

On rappelle que l'estimation d'un canal, en numérique, prend en considération les composants analogiques d'émission, la transmission dans l'air et les composants analogiques de réception. Seule la transmission dans l'air est identique dans un sens (par exemple canal montant UL ou « UpLink ») et dans l'autre (par exemple canal descendant DL ou « DownLink »). Il est donc nécessaire de calibrer la réponse des composants analogiques entre le canal montant et le canal descendant, pour obtenir une parfaire réciprocité du canal.

Ainsi, il est à noter que l'estimation de canal montant *CSI_UL* (obtenue selon l'invention à partir des informations d'acquittement, comme décrit ci-dessus) est légèrement différente de l'estimation de canal descendant *CSI_DL*

Il est donc nécessaire de tenir compte d'un facteur de calibration afin de pouvoir utiliser l'estimation de canal montant *CSI_UL* pour actualiser l'estimation *CSI_DL* du canal descendant et tenir compte de cette l'estimation *CSI_DL* du canal descendant actualisée pour la transmission des données utiles.

On considère que l'estimation *CSI_DL* du canal descendant s'écrit de la manière suivante :

$$CSI_DL = F_{DLR} \text{ x } H_{DL} \text{ x } F_{DLE},$$

avec $H_{DL}$ la matrice des coefficients représentatifs du canal, $F_{DLR}$ la matrice des coefficients représentatifs des filtres analogiques de réception et $F_{DLE}$ la matrice des coefficients représentatifs des filtres analogiques d'émission.

De la même manière, l'estimation *CSI_UL* du canal montant s'écrit :

$$CSI_UL = F_{ULR} \text{ x } H_{UL} \text{ x } F_{ULE},$$

avec $H_{UL}$ la matrice des coefficients représentatifs du canal, $F_{ULR}$ la matrice des coefficients représentatifs des filtres analogiques de réception et $F_{ULE}$ la matrice des coefficients représentatifs des filtres analogiques d'émission.

De plus, on sait que : $H_{UL} = H_{DL}^{-1}$, $F_{DLR} \neq F_{ULR}$ et $F_{DLE} \neq F_{ULE}$.

On considère dans un premier temps que lors de la première itération de la phase de transmission, c'est-à-dire lors de la première transmission de données utiles, après l'étape d'estimation de canal, par exemple par « feedback », le canal n'a pas été modifié et que chaque utilisateur reçoit uniquement les données transmises sur son faisceau (c'est-à-dire que les faisceaux ne génèrent aucune interférence). Dans ce cas, la différence entre l'estimation *CSI_UL* du canal montant obtenue selon l'invention et l'estimation *CSI_DL* du canal descendant obtenue pendant le « feedback » correspond à la différence entre les filtres représentatifs des composants analogiques.

Ainsi, à partir de *CSI_UL* et de *CSI_DL,* on peut effectuer une calibration pour obtenir le facteur de calibration $F_{CAL}$ tel que : $CSI_UL \text{ x } F_{CAL} = CSI_DL$.

Un exemple de technique de calibration est donné dans la norme *IEEE P802.11n/D11.0 Draft standard for Information Technology - Telecommunications and information exchange between systems - Local and metropolitan area networks - Specific requirements Part 11: Wireless LAN Medium Access Control (MAC) and Physical Layer (PHY) specifications Amendment 5: Enhancements for Higher Throughput, Chapitre 20.3.12.1.*

Ce facteur de calibration $F_{CAL}$ est ensuite utilisé pour actualiser, selon l'invention, l'estimation de canal descendant à partir de l'estimation de canal montant.

Ainsi, l'estimation de canal descendant actualisée est obtenue en multipliant l'estimation de canal montant par le facteur de calibration : $CSI_DL\ actualisée = CSI_UL \text{ x } F_{CAL}$.

On rappelle que cette étape d'actualisation est mise en oeuvre itérativement, à partir de chaque information d'acquittement émise par un récepteur pour acquitter la réception de données utiles transmise par un émetteur.

Ainsi, l'actualisation de l'estimation de canal descendant peut être optimisée en tenant compte des différentes valeurs d'estimation de canal montant obtenues au cours des précédentes itérations, ou en effectuant une prédiction linéaire.

Par exemple, on peut prévoir d'effectuer une interpolation temporelle sur les N précédentes itérations :

$$CSI_DL\ actualisée = \frac{\sum_{i}^{i-N} CSI_DL_i}{N}$$

L'estimation de canal descendant actualisée peut alors être utilisée pour la transmission des données utiles suivantes, par exemple pour reconstruire les faisceaux pour une transmission en SDMA. En effet, toutes les techniques SDMA utilisent dans leurs calculs de construction de faisceaux les matrices de canal *CDI_DL*

L'invention permet donc d'obtenir une estimation de canal descendant *CSI_DL* actualisée et de l'utiliser pour la construction d'un nouveau faisceau.

*5.4.2 Durée de la phase de transmission de données utiles /fin des itérations*

L'invention permet donc d'allonger la durée de la phase de transmission de données utiles, entre deux phases d'estimation de canal descendant, en utilisant une estimation du canal montant correspondant, et un facteur de calibration déterminé lors de la première itération de chaque phase de transmission, comme décrit ci-dessus.

Il est cependant nécessaire de mettre en oeuvre à nouveau une phase d'estimation de canal, après un certain temps, par exemple lorsque l'actualisation de l'estimation selon l'invention ne permet plus de tenir compte des variations réelles du canal.

Ainsi, on peut définir un seuil d'actualisation au delà duquel il est nécessaire de mettre en oeuvre une phase d'estimation du canal descendant, avant de continuer à transmettre des données utiles.

Par exemple, ce seuil peut être représentatif de la différence entre l'estimation de canal descendant courante et l'estimation de canal descendant actualisée. Ainsi, lorsque cette différence est trop importante, c'est à dire lorsque la variation du canal est trop importante, une nouvelle phase d'estimation du canal descendant est mise en oeuvre.

De même, le facteur de calibration, représentatif des différences des composants analogiques en émission et en réception, est calculé lors de la première itération de chaque phase de transmission, et ne tient pas compte de variations de la calibration (dues par exemple à des échauffements des composants analogiques) pouvant intervenir pendant la transmission.

Ainsi, on peut définir un critère relatif au facteur de calibration, en fonction duquel une nouvelle phase d'estimation du canal descendant est mise en oeuvre avant de continuer la transmission des données utiles. Par exemple, ce critère peut être un critère externe, issu d'un capteur de température, représentatif d'une variation des composants analogiques, et par conséquent représentatif d'une variation du facteur de calibration.

De plus, l'invention prévoit également de tenir compte d'un seuil du niveau d'interférences observées par un récepteur dans le système. Ainsi, lorsqu'un récepteur constate que le niveau d'interférences reçues avec le signal qui lui est destiné dépasse un certain seuil, par exemple lorsque l'environnement a changé (par exemple parce qu'un nouveau signal est émis vers un utilisateur voisin), il peut le signaler, par exemple dans l'information d'acquittement. Dans ce cas, une nouvelle phase d'estimation du canal descendant est mise en oeuvre avant de continuer la transmission des données utiles, afin de tenir compte de ces interférences dans l'estimation du canal.

Enfin, si l'émetteur n'a plus de données utiles à transmettre, pendant une certaine durée, il est préférable de mettre en oeuvre une nouvelle phase d'estimation du canal plutôt que de repartir, pour la transmission des données utiles suivantes, d'une estimation actualisée selon l'invention. En effet, dans le cas où l'émetteur n'émet plus de données utiles, la mise en oeuvre d'une phase de « feedback » par exemple n'est pas pénalisante pour le débit de transmission total.

*5.5 Exemple de mise en oeuvre de l'invention*

L'invention peut également être mise en oeuvre dans le cadre d'une technique SDMA mettant en oeuvre les premier et deuxième modes décrits en relation avec l'art antérieur.

Selon le deuxième mode, qui permet d'annuler les interférences entre utilisateurs, le point d'accès transmet, vers chaque utilisateur, les symboles pilotes lui permettant d'estimer le canal pour le flux spatial qui lui est destiné, ainsi que les symboles pilotes lui permettant d'estimer le canal pour les flux spatiaux destinés aux autres utilisateurs. Ce deuxième mode permet d'être plus robuste à des variations du canal dans le temps, parce qu'il permet d'annuler l'interférence générée.

L'invention permet dans ce cas d'obtenir une estimation actualisée du canal descendant, avant la mise en oeuvre de ce deuxième mode, de façon à pouvoir mettre en oeuvre l'annulation d'interférences sur la base d'une estimation de canal fiable, car actualisée selon l'invention, au lieu de se baser sur une estimation de canal initiale, obtenue lors de la phase de « feedback » et qui n'est plus représentative du canal avec interférences.

La transition entre les deux modes peut être décidée au niveau du point d'accès, en prenant en compte l'estimation de canal montant *CSI_UL* obtenue selon l'invention.

Dans un autre mode de fonctionnement, la décision de transition entre les deux modes peut être prise au niveau du récepteur. Dans ce cas, la trame de l'acquittement doit être modifiée afin de créer un champ portant cette information de changement de mode. Par exemple, un bit de signalisation en couche physique (sous la forme d'une information cachée dans les bits de padding, comme par exemple décrit dans le document de brevet n° 0857014) ou en couche MAC (sous la forme d'un nouveau champ dans la trame d'acquittement).

*5.6 Structure de l'émetteur*

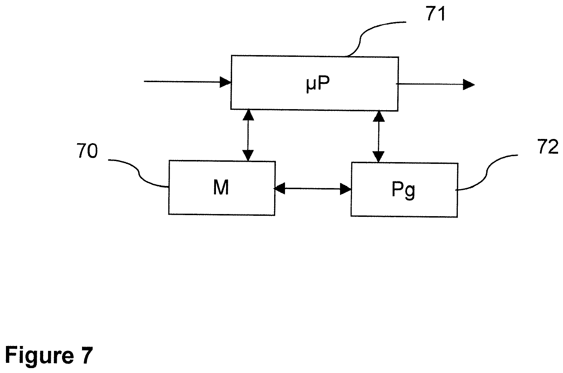

On présente finalement, en relation avec la figure 7, la structure simplifiée d'un émetteur selon le mode de réalisation particulier décrit ci-dessus.

Un tel émetteur comprend une mémoire 71 constituée d'une mémoire tampon, une unité de traitement 72, équipée par exemple d'un microprocesseur $\mu$P, et pilotée par le programme d'ordinateur 73, mettant en oeuvre le procédé d'émission selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée une estimation de canal descendant CSI_DL. Le microprocesseur de l'unité de traitement 72 met en oeuvre les étapes du procédé d'émission décrit précédemment, selon les instructions du programme d'ordinateur 73, pour mettre à jour cette estimation de canal descendant CSI_DL. Pour cela, l'émetteur comprend, outre la mémoire tampon 71, des moyens d'émission de données utiles sur le canal descendant, tenant compte de l'estimation du canal descendant et des moyens de mise à jour de l'estimation du canal descendant, tenant compte d'une information d'acquittement de réception des données utiles, émise par le récepteur associé au canal descendant. Ces moyens sont pilotés par le microprocesseur de l'unité de traitement 72.

## Revendications

**1.** Procédé d'émission d'un signal multiporteuse par un émetteur mettant en oeuvre au moins deux antennes d'émission, à destination d'au moins un récepteur mettant en oeuvre au moins une antenne de réception,

comprenant une étape (21) d'obtention d'une estimation CSI_DL au moyen de pilotes émis par l'émetteur d'au moins un canal de transmission descendant, où un canal descendant est défini entre une desdites antennes d'émission et ladite ou une desdites antennes de réception ; et une phase de transmission (22) mettant en oeuvre au moins une itération des étapes suivantes, pour au moins un canal descendant :

- émission (221) de données utiles sur ledit canal descendant, tenant compte de ladite estimation du canal descendant ;
- mise à jour (222) de ladite estimation du canal descendant comprenant les sous-étapes suivantes :

  - réception d'une information d'acquittement de réception desdites données utiles, émise par le récepteur associé audit canal descendant,
- estimation du canal montant correspondant audit canal descendant, à partir de ladite information d'acquittement,
- actualisation de ladite estimation du canal descendant à partir de ladite estimation du canal montant,
l'étape d'estimation du canal montant délivrant une estimation d'une première portion de la réponse fréquentielle dudit canal montant et le procédé comprenant une étape d'interpolation fréquentielle permettant d'estimer une deuxième portion de ladite réponse fréquentielle à partir de ladite première portion.

2. Procédé d'émission selon la revendication 1, **caractérisé en ce que** la première itération de la phase de transmission met en oeuvre une étape de détermination d'un facteur de calibration par comparaison de ladite estimation du canal descendant, obtenue lors de ladite étape d'obtention, et de ladite estimation du canal montant correspondant audit canal descendant,
et **en ce que** ladite étape d'actualisation tient également compte dudit facteur de calibration.

3. Procédé d'émission selon la revendication 1, **caractérisé en ce que**, ledit récepteur comprenant au moins deux antennes de réception,
ladite information d'acquittement est reçue sous la forme d'une trame d'acquittement d'une couche liaison de données, dite couche MAC, comprenant un paquet d'estimation de canal (L_LTF) portant deux jeux de pilotes associés chacun à une antenne de réception distincte dudit récepteur, et **en ce que** ladite étape d'estimation du canal montant est mise en oeuvre, pour chacun desdits canaux montants, à partir du jeu de pilotes associé à ce canal montant.

4. Procédé d'émission selon la revendication 1, **caractérisé en ce que** ladite information d'acquittement est reçue sous la forme d'une trame d'acquittement d'une couche liaison de données, dite couche MAC, comprenant un paquet d'estimation de canal distinct associé à chaque antenne de réception dudit récepteur (HT_LTF1 et HT_LTF2),
et **en ce que** ladite étape d'estimation du canal montant est mise en oeuvre pour chacun desdits canaux montants à partir du paquet d'estimation de canal associé à l'antenne de réception définissant ledit canal montant.

5. Emetteur d'un signal multiporteuse à destination d'au moins un récepteur mettant en oeuvre au moins une antenne de réception, ledit émetteur mettant en oeuvre au moins deux antennes d'émission, et comprenant des moyens d'obtention d'une estimation d'au moins un canal de transmission descendant au moyen de l'émission de pilotes, où un canal descendant est défini entre une desdites antennes d'émission et ladite ou une desdites antennes de réception ; et des moyens suivants, activés au moins une fois pour au moins un canal descendant sous la forme d'une itération :

- des moyens d'émission de données utiles sur ledit canal descendant, tenant compte de ladite estimation du canal descendant ;
- des moyens de mise à jour de ladite estimation du canal descendant à partir d'une estimation du canal montant comprenant :

  - des moyens de réception d'une information d'acquittement de réception desdites données utiles, émise par le récepteur associé audit canal descendant,
  - des moyens d'estimation du canal montant correspondant audit canal descendant, à partir de ladite information d'acquittement, délivrant une estimation d'une première portion de la réponse fréquentielle dudit canal montant,

- des moyens d'interpolation fréquentielle permettant d'estimer une deuxième portion de la réponse fréquentielle à partir de la première portion.

6. Programme d'ordinateur comportant des instructions pour la mise en oeuvre d'un procédé selon la revendication 1 lorsque ce programme est exécuté par un processeur.

**Patentansprüche**

1. Verfahren zum Senden eines Mehrträgersignals durch einen Sender, der mindestens zwei Sendeantennen einsetzt, an mindestens einen Empfänger, der mindestens eine Empfangsantenne einsetzt, umfassend einen Schritt (21) des Bereitstellens einer Schätzung CSI_DL mittels von Piloten, die vom Sender mindestens eines Abwärtsübertragungskanals gesendet werden, wobei ein Abwärtskanal zwischen einer der Sendeantennen und der oder einer der Empfangsantennen definiert ist; und eine Übertragungsphase (22), die mindestens eine Iteration der folgenden Schritte für mindestens einen Abwärtskanal einsetzt:

- Senden (221) von Nutzdaten über den Abwärtskanal unter Berücksichtigung der Schätzung des Abwärtskanals;
- Aktualisieren (222) der Schätzung des Abwärtskanals, umfassend die folgenden Teilschritte:

- Empfangen einer Information zur Quittierung des Empfangs der Nutzdaten, die von dem dem Abwärtskanal zugeordneten Empfänger gesendet wird,
- Schätzen des dem Abwärtskanal entsprechenden Aufwärtskanals ausgehend von der Quittierungsinformation,
- Aktualisieren der Schätzung des Abwärtskanals ausgehend von der Schätzung des Aufwärtskanals, wobei der Schritt des Schätzens des Aufwärtskanals eine Schätzung eines ersten Abschnitts des Frequenzgangs des Aufwärtskanals ausgibt und das Verfahren einen Frequenzinterpolationsschritt umfasst, der es ermöglicht, einen zweiten Abschnitt des Frequenzgangs ausgehend vom ersten Abschnitt zu schätzen.

**2.** Sendeverfahren nach Anspruch 1, **dadurch gekennzeichnet, dass** die erste Iteration der Übertragungsphase einen Schritt des Bestimmens eines Kalibrierungsfaktors durch Vergleichen der Schätzung des Aufwärtskanals, die beim Bereitstellungsschritt erhalten wurde, mit der Schätzung des dem Abwärtskanals entsprechenden Aufwärtskanals einsetzt, und dadurch, dass der Aktualisierungsschritt den Kalibrierungsfaktor ebenfalls berücksichtigt.

**3.** Sendeverfahren nach Anspruch 1, **dadurch gekennzeichnet, dass**, wenn der Empfänger mindestens zwei Empfangsantennen umfasst,
die Quittierungsinformation in Form eines Quittierungsrahmens einer Datensicherungsschicht, MAC-Schicht genannt, empfangen wird, der ein Kanalschätzungspaket (L_LTF) umfasst, das zwei Pilotsätze trägt, die jeweils einer unterschiedlichen Empfangsantenne des Empfängers zugeordnet sind, und dadurch, dass der Schritt des Schätzens des Aufwärtskanals für jeden der Aufwärtskanäle ausgehend von dem diesem Aufwärtskanal zugeordneten Pilotsatz ausgeführt wird.

**4.** Sendeverfahren nach Anspruch 1, **dadurch gekennzeichnet, dass** die Quittierungsinformation in Form eins Quittierungsrahmens einer Datensicherungsschicht, MAC-Schicht genannt, empfangen wird, der ein unterschiedliches Kanalschätzungspaket umfasst, das jeder Empfangsantenne des Empfängers (HT_LTF1 und HT_LTF2) zugeordnet ist,
und dadurch, dass der Schritt des Schätzens des Aufwärtskanals für jeden der Aufwärtskanäle ausgehend von dem Kanalschätzungspaket ausgeführt wird, das der den Aufwärtskanal definierenden Empfangsantenne zugeordnet ist.

**5.** Sender für ein Mehrträgersignal, das an mindestens einen Empfänger gerichtet ist, der mindestens eine Empfangsantenne einsetzt, wobei der Sender mindestens zwei Sendeantennen einsetzt, und umfassend Einrichtungen zum Bereitstellen einer Schätzung mindestens eines Abwärtsübertragungskanals mittels des Sendens von Piloten, wobei ein Abwärtskanal zwischen einer der Sendeantennen und der oder einer der Empfangsantennen definiert ist;
und der folgenden Einrichtungen, die mindestens einmal für mindestens einen Abwärtskanal in Form einer Iteration aktiviert werden:

- Einrichtungen zum Senden von Nutzdaten über den Abwärtskanal unter Berücksichtigung der Schätzung des Abwärtskanals;
- Einrichtungen zum Aktualisieren der Schätzung des Abwärtskanals ausgehend von einer Schätzung des Aufwärtskanals, umfassend:

  - Einrichtungen zum Empfangen einer Information zur Quittierung des Empfangs der Nutzdaten, die von dem dem Abwärtskanal zugeordneten Empfänger gesendet wird,
  - Einrichtungen zum Schätzen des dem Abwärtskanal entsprechenden Aufwärtskanals ausgehend von der Quittierungsinformation, die eine Schätzung eines ersten Abschnitts des Frequenzgangs des Aufwärtskanals ausgeben,

- Frequenzinterpolationseinrichtungen, die es ermöglichen, einen zweiten Abschnitt des Frequenzgangs ausgehend vom ersten Abschnitt zu schätzen.

**6.** Computerprogramm mit Anweisungen zum Ausführen des Verfahrens nach Anspruch 1, wenn dieses Programm von einem Prozessor abgearbeitet wird.

## Claims

**1.** Method of transmitting a multicarrier signal by a transmitter implementing at least two transmit antennas, destined for at least one receiver implementing at least one receive antenna,
comprising a step (21) of obtaining an estimation CSI_DL by means of pilots transmitted by the transmitter of at least one downlink transmission channel, where a downlink channel is defined between one of said transmit antennas and said or one of said receive antennas;
and a transmission phase (22) implementing at least one iteration of the following steps, for at least one downlink channel:

- transmitting (221) of useful data on said downlink channel, taking account of said estimation of the downlink channel;
- updating (222) of said estimation of the downlink channel comprising the following sub steps:

- reception of an information item of acknowledgement of receipt of said useful data, transmitted by the receiver associated with said downlink channel,
- estimation of the uplink channel corresponding to said downlink channel, on the basis of said acknowledgement information item,
- revising of said estimation of the downlink channel on the basis of said estimation of the uplink channel,

the step of estimating the uplink channel delivering an estimation of a first portion of the frequency response of said uplink channel and the method comprising a step of frequency interpolation making it possible to estimate a second portion of said frequency response on the basis of said first portion.

**2.** Method of transmitting according to Claim 1, **characterized in that** the first iteration of the transmission phase implements a step of determining a calibration factor by comparing said estimation of the downlink channel, obtained during said obtaining step, and said estimation of the uplink channel corresponding to said downlink channel,
and **in that** said step of revising also takes account of said calibration factor.

**3.** Method of transmitting according to Claim 1, **characterized in that** said receiver comprising at least two receive antennas,
said acknowledgement information item is received in the form of an acknowledgement frame in respect of a data link layer, termed the MAC layer, comprising a channel estimation packet (L_LTF) carrying two sets of pilots each associated with a distinct receive antenna of said receiver,
and **in that** said step of estimating the uplink channel is implemented, for each of said uplink channels, on the basis of a set of pilots which is associated with this uplink channel.

**4.** Method of transmitting according to Claim 1, **characterized in that** said acknowledgement information item is received in the form of an acknowledgement frame in respect of a data link layer, termed the MAC layer, comprising a distinct channel estimation packet associated with each receive antenna of said receiver (HT_LTF1 and HT_LTF2),
**in that** said step of estimation of the uplink channel is implemented for each of said uplink channels on the basis of the channel estimation packet associated with the receive antenna defining said uplink channel.

**5.** Transmitter of a multi-carrier signal destined for at least one receiver implementing at least one receive antenna, said transmitter implementing at least two transmit antennas, and comprising means for obtaining an estimation of at least one downlink transmission channel by means of the transmitting of pilots, where a downlink channel is defined between one of said transmit antennas and said or one of said receive antennas;
and of the following means, activated at least once for at least one downlink channel in the form of an iteration:

- means for transmitting useful data on said downlink channel, taking account of said estimation of the downlink channel;
- means for updating said estimation of the downlink channel on the basis of an estimation of the uplink channel comprising:

- means for receiving an information item of acknowledgement of receipt of said useful data, transmitted by the receiver associated with said downlink channel,
- means for estimating the uplink channel corresponding to said downlink channel, on the basis of said acknowledgement information item, delivering an estimation of a first portion of the frequency response of said uplink channel,

- means of frequency interpolation making it possible to estimate a second portion of the frequency response on the basis of the first portion.

**6.** Computer program comprising instructions for the implementation of a method according to Claim 1 when this program is executed by a processor.

AP
Sounding
ACK #1
ACK #2
CTS
DL-MU-MIMO
STA #1
Header
CSI report #1
SIFS
SIFS
ACK
...
STA #2
SIFS
SIFS
Header
CSI report #2
ACK
SIFS
SIFS
t
Phase F
Phase T

**Figure 1**

21
F
CSI_DL
22
221
E
ACK
222
MAJ (CSI_DL)
CSI_DL

**Figure 2**

QPSK 1/2
24 bits
HT Mixed format
L-STF
L-LTF
L-SIG
ACK-data
8 µs
8 µs
4 µs
GI
T1
T2

Figure 3

40MHz DL

6 GI
57 P
3 DC
57 P
5 GI
Freq

2x20MHz UL ACK

6 GI
52 P + 1DC
11 GI
52 P + 1DC
5 GI
Freq

Figure 4

ACK
6 GI
24 P
1 DC
24 P
5 GI
Freq
STA1
Freq
STA2
Freq

**Figure 5**

PLCP
L-STF
L-LTF
L-SIG
ACK-data
tail

**Figure 6a**

| L-STF | L-LTF | L-SIG | HT-SIG | HT-STF | HT-LTF1 | HT-LTF2 | ACK-data | tail |
|---|---|---|---|---|---|---|---|---|

**Figure 6b**

71
µP
70
M
72
Pg

**Figure 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20070189408 A1
- WO 2008036670 A2
- WO 2007109472 A1
- WO 0857014 A